# EUROPEAN PATENT APPLICATION

(11) **EP 3 629 578 A1**
(43) Date of publication of application: **01.04.2020**
(21) Application number: 19196943.5
(22) Date of filing: 12.09.2019
(51) Int. Cl.: H04N 19/103, H04N 19/15, H04N 19/156, H04N 19/164, H04N 19/186, H04N 19/597

(54) **METHODS AND DEVICES FOR DATA PROCESSING, ELECTRONIC DEVICE**

(30) Priority: 30.09.2018 CN 201811162342
(71) Applicant: GUANGDONG OPPO MOBILE TELECOMMUNICATIONS CORP., LTD., Wusha, Chang'an Dongguan, Guangdong 523860 (CN)
(72) Inventor: XIA, Yang, Dongguan, Guangdong 523860 (CN); ZHANG, Tao, Dongguan, Guangdong 523860 (CN); TANG, Kai, Dongguan, Guangdong 523860 (CN)
(74) Representative: Manitz Finsterwald Patent- und Rechtsanwaltspartnerschaft mbB

(57) **Abstract**

There are provided methods and devices for data processing, an electronic device and a storage medium. The method for data processing is applied to a terminal and includes: performing pixel encoding according to pixel values of three-dimensional (3D) video data to obtain pixel encoded data; and sending the pixel encoded data to a Mobile Edge Computing (MEC) server, the pixel encoded data being used by the MEC server to restore the 3D video data. Here, a data volume of the 3D video data before the pixel encoding is performed on the 3D video data is a first data volume, a data volume of the 3D video data after the pixel encoding is performed on the 3D video data is a second data volume, and the first data volume is greater than the second data volume.

## Description

### TECHNICAL FIELD

The disclosure relates to the technical field of information but not limited to the technical field of technical information, and in particular, to methods and devices for data processing, an electronic device and a storage medium.

### BACKGROUND

Various information, such as color, gray, and luminance, of pixels in an image needs to be indicated by pixel values one by one. In a general condition, to transmit a same amount of information, the bandwidth consumed by an image and/or a video is relatively large. Therefore, in some image transmission scenarios, if the image is transmitted continuously, it may consume a great number of bandwidths and/or cause a problem of large transmission delay.

### SUMMARY

The embodiments of the disclosure provide methods and devices for data processing, an electronic device and a storage medium.

A method for data processing is applied to a terminal and includes:
performing pixel encoding according to pixel values of three-dimensional (3D) video data to obtain pixel encoded data; and
sending the pixel encoded data to a Mobile Edge Computing (MEC) server, wherein the pixel encoded data is used by the MEC server to restore the 3D video data.

A data volume of the 3D video data before the pixel encoding is performed on the 3D video data is a first data volume, a data volume of the 3D video data after the pixel encoding is performed on the 3D video data is a second data volume, and the first data volume is greater than the second data volume.

Based on the above solutions, performing pixel encoding according to pixel values of 3D video data to obtain pixel encoded data includes:
performing color encoding according to a color pixel value of the 3D video data to obtain color encoded data; and/or
performing depth value encoding according to a depth-value pixel value of the 3D video data to obtain depth value encoded data.

Based on the above solutions, performing pixel encoding according to pixel values of 3D video data to obtain pixel encoded data includes:
querying a pixel code mapping relationship according to the pixel values of the 3D video data to determine the pixel encoded data.

Based on the above solutions, the method further includes:
selecting a pixel encoding manner according to preset information, wherein the preset information includes at least one of network transmission condition information, load condition information of the terminal, and load condition information of the MEC server.

Performing pixel encoding according to pixel values of 3D video data to obtain pixel encoded data includes:
performing the pixel encoding on the pixel values according to the selected pixel encoding manner to obtain the pixel encoded data.

Based on the above solutions, performing the pixel encoding on the pixel values according to the selected pixel encoding manner to obtain the pixel encoded data includes at least one of:
performing single pixel encoding on pixel values of single pixels in the 3D video data according to a single pixel encoding manner to obtain a first type of encoded data, wherein a total number of bits occupied by the first type of encoded data is smaller than a total number of bits occupied by the pixel value; and
performing combined pixel encoding on pixel values of N^{∗}M pixels of the 3D video data according to a combined pixel encoding manner to obtain a second type of pixel codes, wherein N and M both are positive integers.

Based on the above solution, the N^{∗}M pixels are distributed adjacently.

Alternatively, the N^{∗}M pixels are spaced according to a preset spacing manner.

Based on the above solutions, querying a pixel code mapping relationship according to the pixel values of the 3D video data to determine the pixel encoded data includes:
querying the pixel code mapping relationship according to the pixel values of the 3D video data; and
responsive to that the pixel values are in the pixel code mapping relationship, determining the pixel encoded data according to pixel encoded values corresponding to the pixel values.

Based on the above solutions, the method further includes:
responsive to that the pixel values are not in the pixel code mapping relationship, updating the pixel code mapping relationship according to the pixel values, and sending the updated pixel code mapping relationship or an updated portion of the pixel code mapping relationship to the MEC server.

Based on the above solutions, performing pixel encoding according to pixel values of 3D video data to obtain pixel encoded data includes:
sorting the pixel values of the 3D video data according to a preset sorting manner to obtain pixel value serial numbers of the 3D video data.

A method for data processing is applied to an MEC server and includes:
receiving pixel encoded data sent by a terminal;
restoring pixel values of 3D video data according to the pixel encoded data, wherein a data volume of the 3D video data before pixel encoding is performed on the 3D video data is a first data volume, a data volume of the 3D video data after the pixel encoding is performed on the 3D video data is a second data volume, and the first data volume is greater than the second data volume.

Based on the above solutions, restoring pixel values of 3D video data according to the pixel encoded data includes at least one of:
restoring a color pixel value of the 3D video data according to color encoded data of the pixel encoded data; and
restoring a depth-value pixel value of the 3D video data according to depth value encoded data of the pixel encoded data.

Based on the above solutions, the method further includes:
determining a pixel encoding manner of the pixel encoded data.

Restoring 3D video data according to the pixel encoded data includes:
performing pixel decoding on the pixel encoded data according to the pixel encoding manner to obtain the pixel values of the 3D video data.

Based on the above solutions, determining a pixel encoding manner of the pixel encoded data includes at least one of:
determining the number of pixels included in the 3D video data, determine a total number of pieces of data according to the pixel encoded data, and determining the pixel encoding manner according to the total number of pixels and the total number of pieces of data.
interacting pixel encoding parameters with the terminal, wherein the pixel encoding parameters include at least the pixel encoding manner.

Based on the above solutions, performing pixel decoding on the pixel encoded data according to the pixel encoding manner to obtain the pixel values of the 3D video data includes at least one of:
decoding pixel encoded data of single pixels according to a single pixel encoding manner to restore the pixel values of the 3D video data; and
decoding pixel encoded data of N^{∗}M pixels according to a combined pixel encoding manner to restore the pixel values of the 3D video data.

Based on the above solutions, restoring pixel values of 3D video data according to the pixel encoded data includes:
querying a pixel code mapping relationship according to the pixel encoded data to obtain pixel values corresponding to the pixel encoded data.

Based on the above solutions, the method further includes:
Before restoring the pixel values of the 3D video data according to the pixel encoded data, receiving an updated pixel code mapping relationship or an updated portion of the pixel code mapping relationship sent by the terminal.

A device for data processing is applied to a terminal and includes an encoding module and a sending module.

The encoding module is configured to perform pixel encoding according to pixel values of 3D video data to obtain pixel encoded data.

The sending module is configured to send the pixel encoded data to an MEC server, wherein the pixel encoded data is used by the MEC server to restore the 3D video data.

A data volume of the 3D video data before the pixel encoding is performed on the 3D video data is a first data volume, a data volume of the 3D video data after the pixel encoding is performed on the 3D video data is a second data volume, and the first data volume is greater than the second data volume.

Based on the above solutions, the encoding module includes a color encoding sub-module, and a depth value encoding sub-module.

The color encoding sub-module is configured to perform color encoding according to a color pixel value of the 3D video data to obtain color encoded data; and/or the depth value encoding sub-module is configured to perform depth value encoding according to a depth-value pixel value of the 3D video data to obtain depth value encoded data.

Based on the above solutions, the encoding module is specifically configured to query a pixel code mapping relationship according to the pixel values of the 3D video data to determine the pixel encoded data.

Based on the above solutions, the device further includes a selection module and an encoding module.

The selection module is configured to select a pixel encoding manner according to preset information, wherein the preset information includes at least one of: network transmission condition information, load condition information of the terminal, and load condition information of the MEC server.

The encoding module is specifically configured to perform the pixel encoding on the pixel values according to the selected pixel encoding manner to obtain the pixel encoded data.

Based on the above solutions, the encoding module is at least configured to execute at least one of: performing single pixel encoding on pixel values of single pixels in the 3D video data according to a single pixel encoding manner to obtain a first type of encoded data, wherein a total number of bits occupied by the first type of encoded data is smaller than a total number of bits occupied by the pixel value; and performing combined pixel encoding on pixel values of N^{∗}M pixels of the 3D video data according to a combined pixel encoding manner to obtain a second type of pixel codes, wherein N and M both are positive integers.

Based on the above solution, the N^{∗}M pixels are distributed adjacently.

Alternatively, the N^{∗}M pixels are spaced according to a preset spacing manner.

Based on the above solutions, the encoding module includes a query sub-module and a determination sub-module.

The query sub-module is configured to query the pixel code mapping relationship according to the pixel values of the 3D video data.

The determination sub-module is configured to determine, responsive to that the pixel values are in the pixel code mapping relationship, the pixel encoded data according to pixel encoded values corresponding to the pixel values.

Based on the above solutions, the device further includes an update module.

The update module is configured to update, responsive to that the pixel values are not in the pixel code mapping relationship, the pixel code mapping relationship according to the pixel values, and send the updated pixel code mapping relationship or an updated portion of the pixel code mapping relationship to the MEC server.

Based on the above solutions, the encoding module is specifically configured to sort the pixel values of the 3D video data according to a preset sorting manner to obtain pixel value serial numbers of the 3D video data.

A device for data processing is applied to an MEC server and includes a receiving module and a restoring module.

The receiving module is configured to receive pixel encoded data sent by a terminal.

The restoring module is configured to restore pixel values of 3D video data according to the pixel encoded data, wherein a data volume of the 3D video data before pixel encoding is performed on the 3D video data is a first data volume, a data volume of the 3D video data after the pixel encoding is performed on the 3D video data is a second data volume, and the first data volume is greater than the second data volume.

Based on the above solutions, the restoring module includes at least one of: a color restoring sub-module and a depth value restoring sub-module.

The color restoring sub-module is configured to restore a color pixel value of the 3D video data according to color encoded data of the pixel encoded data.

The depth value restoring sub-module is configured to restore a depth-value pixel value of the 3D video data according to depth value encoded data of the pixel encoded data.

Based on the above solutions, the device further includes a determination module.

The determination module is configured to determine a pixel encoding manner of the pixel encoded data.

The restoring module is specifically configured to perform pixel decoding on the pixel encoded data according to the pixel encoding manner to obtain the pixel values of the 3D video data.

Based on the above solutions, the determination module includes at least one of a first determination sub-module and a second determination sub-module.

The first determination sub-module is configured to determine the number of pixels included in the 3D video data, determine a total number of pieces of data according to the pixel encoded data, and determine the pixel encoding manner according to the total number of pixels and the total number of pieces of data.

The second determination sub-module is configured to interact pixel encoding parameters with the terminal, wherein the pixel encoding parameters at least include: the pixel encoding manner.

Based on the above solutions, the restoring module is specifically configured to execute at least one of:
decoding pixel encoded data of single pixels according to a single pixel encoding manner to restore the pixel values of the 3D video data; and
decoding pixel encoded data of N^{∗}M pixels according to a combined pixel encoding manner to restore the pixel values of the 3D video data.

Based on the above solutions, the restoring module is specifically configured to query a pixel code mapping relationship according to the pixel encoded data to obtain pixel values corresponding to the pixel encoded data.

Based on the above solutions, the device further includes a receiving module.

The receiving module is configured to receive, before restoring the pixel values of the 3D video data according to the pixel encoded data, an updated pixel code mapping relationship or an updated portion of the pixel code mapping relationship sent by the terminal.

There is provided a computer storage medium having stored thereon computer instructions that when being executed by a processor, causes the processor to implement the operations of the method for data processing applied to the terminal; or that when being executed by a processor, causes the processor to implement the operations of the method for data processing applied to an MEC server.

There is provided an electronic device, including a memory, a processor, and a computer instructions stored on the memory and executable on the processor, wherein the processor executes the instructions to implement the operations of the method for data processing applied to the terminal, or implement the operations of the method for data processing applied to an MEC server.

According to the methods and devices for data processing, the electronic device and the storage medium provided by the embodiments of the disclosure, the terminal does not directly transmit the pixel values of the 3D video data but performs the pixel encoding on the pixel values and then transmits the pixel encoded data. The data volume of the transmitted pixel encoded data is smaller than the data volume of the directly transmitted pixel values, so that the bandwidth and delay required by transmission are reduced; and thus, the characteristics of small transmission data volume, small required bandwidth and small transmission delay are achieved.

### BRIEF DESCRIPTION OF DRAWINGS

FIG. 1 illustrates an architectural schematic diagram of a system to which a method for data processing provided by an embodiment of the disclosure is applied;
FIG. 2 illustrates a flowchart of a method for data processing provided by an embodiment of the disclosure;
FIG. 3 illustrates a flowchart of another method for data processing provided by an embodiment of the disclosure;
FIG. 4 illustrates a flowchart of a still another method for data processing provided by an embodiment of the disclosure;
FIG. 5 illustrates a structural schematic diagram of a device for data processing provided by an embodiment of the disclosure;
FIG. 6 illustrates a structural schematic diagram of anther device for data processing provided by an embodiment of the disclosure; and
FIG. 7 illustrates a structural schematic diagram of an electronic device provided by an embodiment of the disclosure.

### DETAILED DESCRIPTION

Before the technical solutions in the embodiments of the disclosure are described in detail, a system architecture of an application of a method for data processing in an embodiment of the disclosure will be described briefly. The method for data processing in the embodiments of the disclosure is applied to a relevant service of 3D video data. The service may be, for example, a service for sharing the 3D video data, or a live service based on the 3D video data, etc. In such case, because of a large data collection volume of the 3D video data, a high technical support is required by depth data and 2D video data that are transmitted respectively in a data transmission process, and thus the mobile communication network needs to have a rapid data transmission rate and a stable data transmission environment.

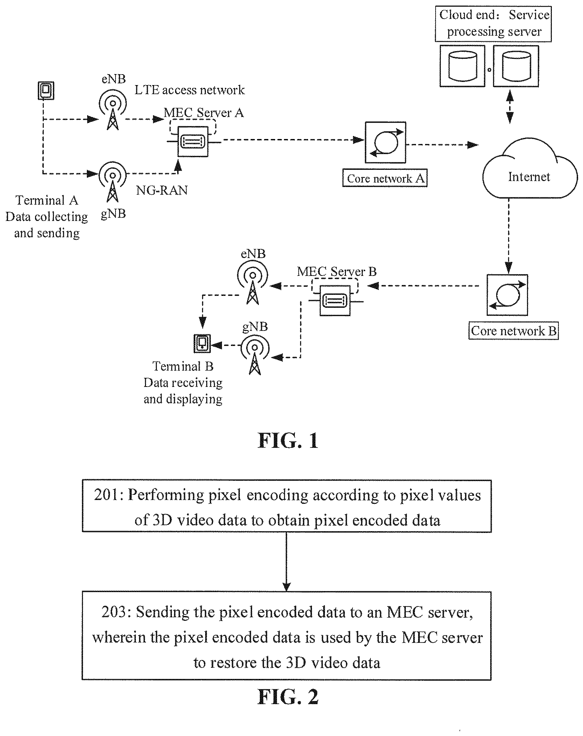

FIG. 1 illustrates an architectural schematic diagram of a system to which a method for data processing provided by an embodiment of the disclosure is applied. As illustrated in FIG. 1, the system may include a terminal, a base station, an MEC server, a service processing server, a core network and an Internet, etc. A high-speed channel is established between the MEC server and the service processing server via the core network to implement data synchronization.

For example, in an application scenario in FIG. 1 where two terminals are interacted with each other, the MEC server A is an MEC server deployed close to the terminal A (sending end), and the core network A is a core network in an area where the terminal A is located. Correspondingly, the MEC server B is an MEC server deployed close to the terminal B (receiving end), and the core network B is a core network in an area where the terminal B is located. High-speed channels may be respectively established between the MEC server A and the MEC server B and the service processing server via the core network A and the core network B to implement data synchronization.

After the 3D video data sent by the terminal A is transmitted to the MEC server A, the MEC server A synchronizes the data to the service processing server via the core network A; and then, the MEC server B acquires, from the service processing server, the 3D video data sent by the terminal A, and sends the 3D video data to the terminal B to display.

Here, if the terminal B and the terminal A implement the transmission via a same MEC server, the terminal B and the terminal A implement the transmission of the 3D video data directly via one MEC server without participation of the service processing server. Such a manner is called a local backhaul manner. Specifically, supposing that the terminal B and the terminal A implement the transmission of the 3D video data via the MEC server A. After the 3D video data sent by the terminal A is transmitted to the MEC server A, the MEC server A sends the 3D video data to the terminal B to display.

Here, the terminal may be selectively accessed, based on a network condition, or configuration condition or configured algorithm of the terminal, to an eNB of a 4G network or to a gNB of a 5G network, so that the eNB is connected with the MEC server via a Long Term Evolution (LTE) access network, and the gNB is connected with the MEC server via a Next Generation Radio Access Network (NG-RAN).

Here, the MEC server is deployed close to the terminal or a network edge side of a data source. The so-called being close to the terminal or close to the data source refers to being close to the terminal or close to the data source in both logical positions and geographical positions. Different from the fact that main service processing servers of the existing mobile communication network are deployed in several big cities, a plurality of MEC servers may be deployed in one city. For example, when there are many users in an office building, one MED server may be deployed nearby the office building.

As an edge computing gateway capable of fusing a network, computing, storing and applying a core competence, the MEC server provides a platform support including a device domain, a network domain, a data domain and an application domain for the edge computing. The MEC server is connected to various types of intelligent devices and sensors, and provides intelligent connection and data processing services in site, so that different types of applications and data is processed in the MEC server, thus implementing key intelligent services such as service timeliness, service intelligence, data aggregation and interactive operation, security and privacy protection, and effectively improving the intelligent decision efficiency of each service.

As illustrated in FIG. 2, this embodiment provides a method for data processing, which is applied to a terminal and includes the following operations.

At Operation 201, pixel encoding is performed according to pixel values of 3D video data to obtain pixel encoded data.

At Operation 203, the pixel encoded data is sent to an MEC server. Here, the pixel encoded data is used by the MEC server to restore the 3D video data.

A data volume of the 3D video data before the pixel encoding is performed on the 3D video data is a first data volume, a data volume of the 3D video data after the pixel encoding is performed on the 3D video data is a second data volume, and the first data volume is greater than the second data volume.

The method for data processing provided by the embodiment is applied to the terminal. The terminal may be various types of terminals, such as a mobile phone, a tablet computer or a wearable device, or a fixed image monitor, etc. The terminal may be a fixed terminal and/or a mobile terminal.

In some embodiments, the 3D video data includes a Two-Dimensional (2D) image and a depth image. The 2D image includes a color pixel. A pixel value of the color pixel is a color value. For example, the color value is a Red/Green/Blue (RGB) value or a Luminance/Luma/Chrominance (YUV) value.

The depth image includes a depth pixel, and a pixel value of the depth pixel is a depth value. Here, the depth value characterizes a spatial distance between a collection target and an image collection module. The 3D video data and the depth image may construct a 3D image in a 3D image space.

In some embodiments, the 2D image and the depth image are consistent in image size. For example, the 2D image and the depth image each includes W^{∗}H pixels, where the W indicates the number of pixels included in a first direction, and the H indicates the number of pixels included in a second direction. The W and the H both are the positive integers.

In some embodiments, the 2D image and the depth image are two images collected at a same moment. In order to reduce the data volume, the image sizes of the 2D image and the depth image meet a preset relationship. For example, the depth image includes W^{∗}H images and the depth image includes (W/a)^{∗}(H/b) pixels. In this way, one depth pixel corresponds to a^{∗}b color pixels. When a 3D video is constructed, the pixel values of a^{∗}b adjacent color pixels may be applied according to the pixel values of one depth pixel. For example, (W/a)^{∗}(H/b) is equal to (W/2)^{∗}(H/2). In this way, one depth pixel corresponds to 4 color pixels. When the 3D video is constructed, the pixel values of the 4 adjacent color pixels may be applied according to the pixel values of one depth pixel, so that the image data volume of the depth image is reduced. Generally, as concave-convex senses of very small areas adjacent to an object are consistent, when the image size of the depth image is smaller than the image size of the 2D image, the restoration and construction of the 3D video may also be maintained at a high precision. Meanwhile, the data volume interacted between the terminal and the MEC server and/or data volume to be processed by the MEC server is reduced. In some embodiments, when the size of the generated image is smaller than the size of the 2D image, at least one of the following manners may be provided.

The depth image is collected by directly using the image size of the depth image.

An original depth image is collected by using the image size of the 2D image. Then, according to the image size of the depth image and pixel values of adjacent a^{∗}b pixels, the depth image is generated. For example, the depth image is generated according to a mean value or a mid-value of the adjacent a^{∗}b pixel values.

In this embodiment, the first encoding from sensor data to pixel values has been already finished. In this embodiment, the pixel values are subject to second encoding. Here, the second encoding is the pixel encoding; and upon the completion of the pixel encoding, the pixel encoded data is obtained.

In some embodiments, after the pixel values are subject to the pixel encoding, the generated pixel encoding data may include pixel value codes, instead of the pixel values. In this way, upon the reception of the pixel encoded data, the receiving end cannot display or read the image directly according to the pixel encoded data, and needs to restore the pixel values first and then may display or read the image normally.

In some embodiments, the first encoding may be the encoding provided by many image collection modules in itself. Therefore, each image collection module stores the pixel values directly by collecting light rays upon the completion of the conversion of the sensor data, i.e., the first encoded data is finished.

Upon the completion of the pixel encoding, the pixel encoded data is transmitted to the MEC server, so that the MEC server generates the 3D video. In this embodiment, after the secondary pixel encoding, the obtained second data volume is smaller than the first data volume before encoding, so that the data volume for transmitting the 3D video data is reduced, and the bandwidths consumed by the data volume as well as the transmission delay required by a great number of pieces of data are reduced; and therefore, the characteristics of small transmission data volume, few consumed bandwidths and small transmission delay are achieved. Consequently, the delay of the data received by the MEC server is small, and it may be quick and accurate to restore the 3D video data and construct the 3D video.

In some embodiments, performing pixel encoding according to pixel values of 3D video data to obtain pixel encoded data includes:
performing color encoding according to a color pixel value of the 3D video data to obtain color encoded data; and/or
performing depth value encoding according to a depth-value pixel value of the 3D video data to obtain depth value encoded data.

In some embodiments, the encoding on the pixel values may only to perform color encoding on color pixel values of color pixels in the 3D video data to obtain color encoded data.

In some embodiments, the encoding on the pixel values may only to perform depth-value encoding on a depth-value pixel value in the 3D video data to obtain depth value encoded data that is encoded again.

No matter it is the color encoding or the depth-value encoding, after the secondary encoding, the data volume transmitted to the MEC server may be reduced.

In other embodiments, the pixel encoding in the Operation 201 may be that the color encoding and the depth-value encoding are performed simultaneously.

The Operation 201 may include:
matching the pixel values in the 3D video data with pixel values in a pixel code mapping relationship; and
determining the pixel encoded data according to a matching result. For example, a pixel value A1 in one or more 3D video data is matched with all pixel values in the pixel code mapping relationship; and if the pixel value A1 is matched, the pixel encoded data, corresponding to the pixel value A1, in the pixel code mapping relationship is taken as a pixel encoding result of the pixel value A1.

There are the following three cases for the matching result:
the matching result which indicates that the matching is successful; and the successful matching includes the matching result indicating that a same condition or a similar condition is met;
the matching result which indicates that the matching is not successful, i.e., the matching result does not meet the same condition and/or the similar condition.

If the same condition is met, it is indicated that the pixel values in the 3D video data collected at present are located in the pixel code mapping relationship.

If the similar condition is met, it is indicated that the pixel values in the 3D video data collected at present are located in the pixel code mapping relationship.

In some embodiments, it may be determined that the successful matching is to meet the same condition or the similar condition according to a current requirement.

In some embodiments, if it is scanned that a pixel degree between pixel values of N^{∗}M pixels in the 3D video data collected at present and pixel values of preset N^{∗}M pixels in the pixel code mapping relationship is greater than a preset similarity threshold such as 70%, 80%, 90% or 85%, it may be considered that pixel encoded data of the N^{∗}M pixels scanned at present and the N^{∗}M pixels in the pixel code mapping relationship meet the similar condition of the pixel encoding, and the pixel encoded data of the N^{∗}M pixels in the pixel code mapping relationship may be directly taken as the color encoded data of the pixel values of the N^{∗}M pixels scanned at present.

In other embodiments, if the pixel degree between the pixel values of the N^{∗}M pixels in the 3D video data collected at present and the pixel values of the preset N^{∗}M pixels in the pixel code mapping relationship is greater than the preset similarity threshold such as 70%, 80%, 90% or 85%, pixel values of one or more pixels in the pixel values of the scanned N^{∗}M pixels different from the pixel values of the N^{∗}M pixels in the pixel code mapping relationship are further extracted, and pixel value differences between the extracted pixel values and the pixel values of the N^{∗}M pixels in the pixel code mapping relationship are calculated; if the pixel value differences are within a preset different range, it may be considered that the pixel encoded data of the N^{∗}M pixels scanned at present and the N^{∗}M pixels in the pixel code mapping relationship meet the similar condition of the pixel encoding, and the pixel encoded data of the N^{∗}M pixels in the pixel code mapping relationship may be directly taken as the color encoded data of the pixel values of the N^{∗}M pixels scanned at present; or otherwise, it may be considered that the pixel encoded data of the scanned N^{∗}M pixels and the N^{∗}M pixels in the pixel code mapping relationship do not meet the similar condition of the pixel encoding. For example, if a pixel value difference is within the preset different range, such a case may include the following conditions.

The pixel value difference indicates that two pixel values are approximate values, e.g., color approximate values. If the pixel value difference indicates that two colors are reverse colors, it may be considered that the pixel value difference is not within the preset difference range. If a depth difference between two depth pixels indicates that two depth value differences are beyond a preset depth value or a depth ratio, it may be considered that the depth difference is not within the preset different range; or otherwise, it may be considered that the depth difference is within the preset difference range.

In other embodiments, if the code mapping relationship is a code mapping function, the pixel encoded data is automatically output by inputting the pixel values to the code mapping function. For example, the code mapping relationship is determined by fitting color values in a sample image. In this way, by inputting each pixel value or each group of pixel values to the code mapping function, the pixel encoded data is obtained automatically, and thus the pixel encoded data is not determined via the matching manner.

To sum up, in the Operation 201, the pixel encoded data is determined in a plurality of manners and a specific implementation is not limited to any of the manners.

In some embodiments, the Operation 201 includes:
querying a pixel code mapping relationship according to the pixel values of the 3D video data to determine the pixel encoded data.

In some embodiments, the pixel code mapping relationship may be known by the terminal and the MEC server in advance, e.g., the pixel code mapping relationship is stored by the MEC server and the terminal in advance.

In some embodiments, the pixel code mapping relationship is negotiated by the terminal and the MEC server in advance.

The pixel code mapping relationship may include at least one of:
a pixel code mapping table;
a plurality of discrete pixel code mapping value pairs; and
function expression manners for the pixel values and the pixel encoded data.

In conclusion, the pixel code mapping relationship has at least a plurality of expression manners and is not limited to any one of them.

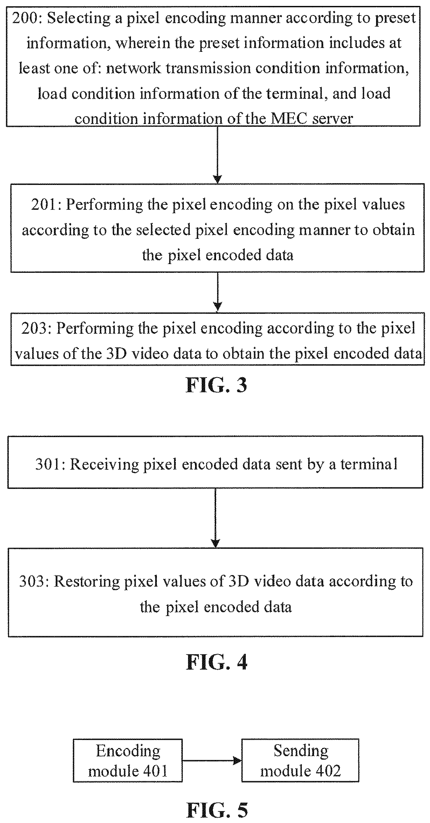

In some embodiments, as illustrated in FIG. 3, the method further includes the following operations.

At Operation 200, a pixel encoding manner is selected according to preset information. The preset information includes at least one of: network transmission condition information, load condition information of the terminal, and load condition information of the MEC server.

The Operation 201 may include: performing the pixel encoding on the pixel values according to the selected pixel encoding manner to obtain the pixel encoded data.

For example, if the network transmission condition information indicates that the current available bandwidth is greater than a bandwidth required to directly transmit the pixel values, the pixel encoding may not be performed.

In another example, if the network transmission condition information indicates that the current available bandwidth is smaller than the bandwidth required to directly transmit the pixel values, a pixel encoding manner having the data volume after the pixel encoding smaller than or equal to the current available bandwidth is selected according to the current available bandwidth.

In another example, when different pixel encoding manners are adopted, the calculated amounts required for encoding of the terminal and the calculated amounts for restoration of the MEC server are different.

In this embodiment, a suitable pixel encoding manner is further selected according to the load condition information of the terminal and/or the load condition information of the MEC server.

The load condition information may include at least one of: a current load rate, a current load capacity, a maximum load rate and a maximum load capacity.

If the current load rate is high or the current load capacity is large, a pixel encoding manner having a small encoding or decoding calculated amount is selected preferably; or otherwise, a selection may be made freely or a selection may be made according to the network transmission condition information and other reference factors.

In some embodiments, performing the pixel encoding on the pixel values according to the selected pixel encoding manner to obtain the pixel encoded data includes at least one of:
performing single pixel encoding on pixel values of single pixels in the 3D video data according to a single pixel encoding manner to obtain a first type of encoded data, wherein a total number of bits occupied by the first type of encoded data is smaller than a total number of bits occupied by the pixel value; and
performing combined pixel encoding on pixel values of N^{∗}M pixels of the 3D video data according to a combined pixel encoding manner to obtain a second type of pixel codes, wherein N and M both are positive integers.

In this embodiment, the single pixel encoding manner refers to one pixel value is corresponding to one pixel encoded data. For example, an image of the 3D video data includes S pixels, and S pieces of first type of encoded data are obtained via the single pixel encoding. In order to reduce the data volume, the number of bits occupied by one piece of first type of encoded data is smaller than the number of bits occupied by the pixel value itself. For example, a pixel value occupies 32 bits or 16 bits, and the piece of first type of encoded data only occupies 8 bits or 10 bits. Since the number of bits required to transmit each single pixel is reduced, the required data volume is reduced in total.

In some embodiments, the combined pixel encoding manner may further be adopted.

The combined pixel encoding manner refers to that the pixel encoding is performed on a plurality of pixels simultaneously.

For example, an adjacent pixel matrix is encoded simultaneously, or the pixel encoding is performed on a plurality of matrix or non-matrix arranged pixels simultaneously.

In some embodiments, a pixel matrix composed of 3^{∗}3 or 4^{∗}4 pixels is encoded. In some embodiments, the N^{∗}M can be exactly divided by pixels included in one frame of 3D image data.

In some cases, when the image collection is performed, the depth values and/or color information of these adjacent pixels are relatively fixed, so these color combinations or depths may be combined and preset code values in the pixel code mapping relationship may be generated. Therefore, in the subsequent pixel encoding, by scanning the color pixel values or depth pixel values in a corresponding 3D video data frame, whether a special color combination and/or depth combination is included or not is determined, and thus corresponding code values are converted and the pixel encoded data is obtained.

In some embodiments, the single pixel encoding or the combined pixel encoding may be used in a mixed manner according to a current requirement.

While the pixel encoded data is transmitted, or before the pixel encoded data is transmitted, the selected encoding manner may be notified in advance. The selected encoding manner may be the single pixel encoding, the combined pixel encoding, or mixed pixel encoding mixed with the single pixel encoding and the combined pixel encoding.

The N^{∗}M pixels are distributed adjacently.

The N^{∗}M pixels are spaced according to a preset spacing manner.

If the N^{∗}M pixels are distributed adjacently, an N^{∗}M pixel matrix is formed.

Alternatively, the N^{∗}M pixels are spaced according to a preset spacing manner, e.g., a preset number of pixels may be spaced by two pixels in the N^{∗}M pixels, and e.g., one or more pixels are spaced.

In some embodiments, the N^{∗}M may be determined dynamically or may be set statically.

For example, the image in a 3D image data frame is divided into a first area and a second area, the single pixel encoding may be used by the first area, and the combined pixel encoding may be used by the second area.

Also for example, the pixel values for the first area of the image in the 3D image frame are directly transmitted to the MEC server, and the second area is subject to the single pixel encoding and/or combined pixel encoding.

Therefore, the relationship between the transmission data volume and the image quality may be well balanced.

In some embodiments, querying a pixel code mapping relationship according to the pixel values of the 3D video data to determine the pixel encoded data includes:
querying the pixel code mapping relationship according to the pixel values of the 3D video data;
responsive to that the pixel values are in the pixel code mapping relationship, determining the pixel encoded data according to pixel encoded values corresponding to the pixel values.

The pixel code mapping relationship for image data of one 3D video data frame may be determined in advance, may also not be determined in other cases, or may change along with the lapse of the time.

For example, with a 3D live video of an anchor as an example, if the anchor has participated in the 3D video live broadcasting, a terminal or an MEC server to which the anchor belongs may store a code mapping relationship for a face of the anchor. If the decoration is increased on the face of the anchor or the makeup changes, at least bright-color image of the face changes possibly; and at this time, the pixel mapping relationship may be not within the pixel code mapping relationship.

In other embodiments, the method further includes:
responsive to that the pixel values are not in the pixel code mapping relationship, updating the pixel code mapping relationship according to the pixel values, and sending the updated pixel code mapping relationship or an updated portion of the pixel code mapping relationship to the MEC server.

In this embodiment, in order to determine the code mapping relationship conveniently, one or more 3D video data of a target object are collected in an interactive handshaking or debugging stage before formal live broadcasting; and by scanning pixel values of these 3D video data, whether a pixel mapping relationship of the corresponding target object is established or not, or whether the pixel mapping relationship needs to be updated or not is determined. If the pixel 3D mapping relationship needs to be updated, the 3D mapping relationship is updated; and if the 3D mapping relationship does not need to be updated, the formal interaction of the 3D video data may be directly entered.

In some embodiments, the Operation 201 may include:
sorting the pixel values of the 3D video data according to a preset sorting manner to obtain pixel value serial numbers of the 3D video data.

For example, with a face as an example, a skin color and an undulating shape of the face have its maximum value and minimum value, so that a 2D image and/or depth image collected by using the image collection module are within a special color pixel value or depth pixel value interval, and in most cases, do not cover a maximum pixel value and a minimum pixel value of the whole image collector. For 215 possible pixel values corresponding to a 16-bit color channel, about 200 pixel values or even about more than 100 pixel values can be effectively utilized.

By sorting the pixel values, how many pixel values are generated at present may be obtained. For example, if P pixel values are generated, the pixel encoding on all pixels can be completed by rounding up to an integer number of bits on log₂P, and the pixel encoded data only occupying the integer number of bits of the log₂P are obtained. Therefore, the required data volume may be greatly reduced.

If a target object (for example, various types of anchors and a special type of scenario) is frequently occurred in a video, the statistic number of pixel values may be sorted to generate the pixel code mapping relationship, or the pixel code mapping relationship is updated to complete the determination and generation of the code video relationship.

In some embodiments, sorting the pixel values of the 3D video data according to a preset sorting manner to obtain pixel value serial numbers of the 3D video data may include:
if the single code mapping manner is adopted, sorting the pixel values of the 3D video data according to the preset sorting manner to obtain the pixel value serial numbers of the 3D video data; and
establishing a mapping relationship between the pixel values and the pixel value serial numbers.

For example, the pixel value serial numbers include at least one of:
color value serial numbers formed by sorting the color values; and
depth value serial numbers formed by sorting the depth values.

In some other embodiments, sorting the pixel values of the 3D video data according to a preset sorting manner to obtain pixel value serial numbers of the 3D video data may further include:
if the current code mapping manner is the combined code mapping manner, determining a value of the N^{∗}M in the combined code mapping manner according to the required precision and/or target scenario and other reference factors, wherein the N and M are a positive integer;
sorting the pixel values of the 3D video data by taking pixel values of N^{∗}M pixels as a combination to obtain pixel combined serial numbers of the 3D video data; and
establishing a mapping relationship between the pixel values and the pixel combined serial numbers.

In this embodiment, N^{∗}M is determined according to the required precision, wherein N is the number of rows corresponding to one pixel combination, and M is the number of columns corresponding to one pixel combination, or M is the number of rows corresponding to one pixel combination, and M is the number of columns corresponding to one pixel combination.

In some embodiments, the pixel combined serial numbers include at least one of:
color value combined serial numbers formed by sorting color value combinations; and
depth value combined serial numbers formed by sorting depth value combinations.

Therefore, in some embodiments, sorting the pixel values of the 3D video data by taking pixel values of N^{∗}M pixels as a combination to obtain pixel combined serial numbers of the 3D video data may include:
sorting color values of color pixels in the 3D video data by taking color values of N^{∗}M pixels as a combination to obtain color value combined serial numbers of the 3D video data. For example, sorting may be made according to a scanned time sequence of the color value combinations in sorting, or sorting may be made based on the scanned frequency of the color value combinations to obtain the color value combined serial numbers.

In some embodiments, for different target objects, the obtained pixel code mapping relationships may be different. As a result, the data has the characteristic of high security on the premise of not disclosing the pixel code mapping relationship. Therefore, if the pixel encoded data subject to the pixel encoding are captured by other person in the transmission process, the 3D video data also cannot be decoded normally, and thus the characteristic of high transmission security is achieved.

By sorting the statistic number, the serial number of the pixel encoded value that is highly occurred is in the front, so that when the code of 3D video data of a target is collected subsequently by using the sample 3D video data in a same target scenario, the number of times that the pixel value is matched may be reduced, and the pixel encoding efficiency is improved.

As illustrated in FIG. 4, this embodiment provides a method for data processing. The method is applied to an MEC server and includes the following operations.

At Operation 301, pixel encoded data is received from a terminal.

At Operation 303, pixel values of 3D video data is restored according to the pixel encoded data. Here, a data volume of the 3D video data before pixel encoding is performed on the 3D video data is a first data volume, a data volume of the 3D video data after the pixel encoding is performed on the 3D video data is a second data volume, and the first data volume is greater than the second data volume.

In this embodiment, the pixel encoded data but not the pixel values are received directly. Upon the reception of the pixel encoded data, the MEC server needs to restore the pixel encoded data to the pixel values of the 3D video data.

The pixel encoded data received by the MEC server is smaller than the directly received pixel values in data volume, so the consumed bandwidth is smaller.

In some embodiments, the Operation 303 may include at least one of:
restoring a color pixel value of the 3D video data according to color encoded data of the pixel encoded data; and
restoring a depth-value pixel value of the 3D video data according to depth value encoded data of the pixel encoded data.

In this embodiment, the color pixel values are restored based on the color encoded data; and the depth-value pixel values are restored according to the depth value encoded data.

In other embodiments, the method further includes the following operations.

At Operation 302, a pixel encoding manner of the pixel encoded data is determined. For example, the pixel encoding manner may include a single encoding manner and/or a combined encoding manner.

The Operation 303 may include the following operations:
performing pixel decoding on the pixel encoded data according to the pixel encoding manner to obtain the pixel values of the 3D video data.

In some embodiments, there are a plurality of manners in the Operation 302, and several optional manners are provided as follows:
Optional manner 1: determining the number of pixels included in the 3D video data, determining a total number of pieces of data according to the pixel encoded data, and determining the pixel encoding manner according to the total number of pixels and the total number of pieces of data.
Optional manner 2: interacting pixel encoding parameters with the terminal, wherein the pixel encoding parameters include at least the pixel encoding manner.

In some embodiments, the pixel encoding parameters include the pixel encoding manner; and in other embodiments, the pixel encoding parameters may further include:
a value of N^{∗}N of the combined encoding manner;
the number of bits occupied by one pixel encoded data in the single encoding manner and/or the combined encoding manner; and
a code mapping relationship.

In some embodiments, the MEC server may also not receive the pixel encoding parameters from the terminal. For example, the terminal to which an anchor belongs is often used in live broadcasting, and the 3D video data will be generated in the live broadcasting. Once the MEC server finds the pixel encoded data from a special terminal, the MEC server restores the pixel values by adopting default pixel encoding parameters. Here, the default pixel encoding parameters may include: a default encoding manner and/or a pixel code relationship.

In some embodiments, performing pixel decoding on the pixel encoded data according to the pixel encoding manner to obtain the pixel values of the 3D video data includes at least one of.
decoding pixel encoded data of single pixels according to a single pixel encoding manner to restore the pixel values of the 3D video data; and
decoding pixel encoded data of N^{∗}M pixels according to a combined pixel encoding manner to restore the pixel values of the 3D video data.

In some embodiments, the Operation 302 may include: querying a pixel code mapping relationship according to the pixel encoded data to obtain pixel values corresponding to the pixel encoded data.

In some embodiments, the method further includes the following operations.
before restoring the pixel values of the 3D video data according to the pixel encoded data, receiving an updated pixel code mapping relationship or an updated portion of the pixel code mapping relationship sent by the terminal.

With the interaction of the pixel code mapping relationship, the pixel code mapping relationship is synchronized in the terminal and the MEC server.

As illustrated in FIG. 5, this embodiment further provides a device for data processing, which is applied to a terminal and includes an encoding module 401 and a sending module 402.

The encoding module 401 is configured to perform pixel encoding according to pixel values of 3D video data to obtain pixel encoded data.

The sending module 402 is configured to send the pixel encoded data to an MEC server, wherein the pixel encoded data is used by the MEC server to restore the 3D video data.

A data volume of the 3D video data before the pixel encoding is performed on the 3D video data is a first data volume, a data volume of the 3D video data after the pixel encoding is performed on the 3D video data is a second data volume, and the first data volume is greater than the second data volume.

In some embodiments, the encoding module 401 and the sending module 402 each may be a program module, and are corresponding to a computer executable code. The computer executable codes can implement, when being executed, the sending of the pixel encoded data and the 3D video data.

In other embodiments, the encoding module 401 and the sending module 402 each may further be a combination of a hardware module and a program module, such as a complex programmable array or a site programmable array.

In still other embodiments, the encoding module 401 and the sending module 402 each may correspond to a hardware module, e.g., the encoding module 401 and the sending module 402 each may be an application-specific integrated circuit.

In some embodiments, the encoding module 401 includes: a color encoding sub-module and a depth value encoding sub-module.

The color encoding sub-module is configured to perform color encoding according to a color pixel value of the 3D video data to obtain color encoded data; and/or the depth value encoding sub-module is configured to perform depth value encoding according to a depth-value pixel value of the 3D video data to obtain depth value encoded data.

In some embodiments, the encoding module 401 is specifically configured to query a pixel code mapping relationship according to the pixel values of the 3D video data to determine the pixel encoded data.

In some embodiments, the device further includes a selection module.

The selection module is configured to select a pixel encoding manner according to preset information, wherein the preset information includes at least one of: network transmission condition information, load condition information of the terminal, and load condition information of the MEC server.

The encoding module 401 is specifically configured to perform the pixel encoding on the pixel values according to the selected pixel encoding manner to obtain the pixel encoded data.

In some embodiments, the encoding module is at least configured to execute at least one of: perform single pixel encoding on pixel values of single pixels in the 3D video data according to a single pixel encoding manner to obtain a first type of encoded data, wherein a total number of bits occupied by the first type of encoded data is smaller than a total number of bits occupied by the pixel value; and perform combined pixel encoding on pixel values of N^{∗}M pixels of the 3D video data according to a combined pixel encoding manner to obtain a second type of pixel codes, wherein N and M both are positive integers.

In some embodiments, the N^{∗}M pixels are distributed adjacently.

Alternatively, the N^{∗}M pixels are spaced according to a preset spacing manner.

In some embodiments, the encoding module 401 includes a color encoding sub-module and a depth value encoding sub-module.

The query sub-module is configured to query the pixel code mapping relationship according to the pixel values of the 3D video data.

The determination sub-module is configured to determine, responsive to that the pixel values are in the pixel code mapping relationship, the pixel encoded data according to pixel encoded values corresponding to the pixel values.

In some embodiments, the device further includes an update module.

The update module is configured to update, responsive to that the pixel values are not in the pixel code mapping relationship, the pixel code mapping relationship according to the pixel values, and send the updated pixel code mapping relationship or an updated portion of the pixel code mapping relationship to the MEC server.

In some embodiments, the encoding module 401 is specifically configured to sort the pixel values of the 3D video data according to a preset sorting manner to obtain pixel value serial numbers of the 3D video data may include the following operations.

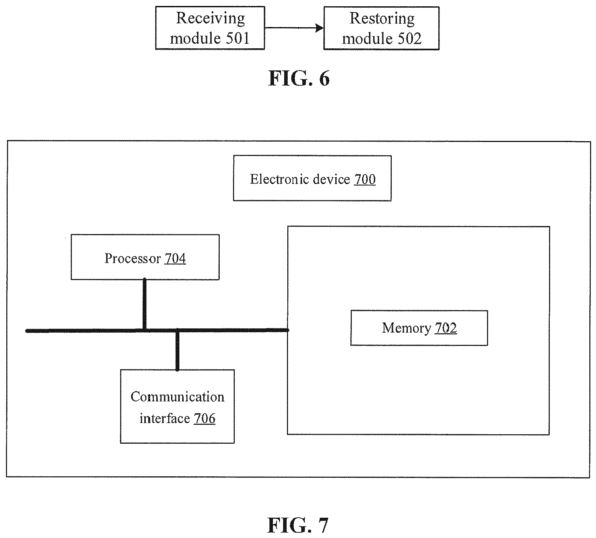

As illustrated in FIG. 6, this embodiment further provides a device for data processing, which is applied to an MEC server and includes a receiving module 501 and a restoring module 502.

The receiving module 501 is configured to receive pixel encoded data sent by a terminal.

The restoring module 502 is configured to restore pixel values of 3D video data according to the pixel encoded data, wherein a data volume of the 3D video data before pixel encoding is performed on the 3D video data is a first data volume, a data volume of the 3D video data after the pixel encoding is performed on the 3D video data is a second data volume, and the first data volume is greater than the second data volume.

In some embodiments, the receiving module 501 and the restoring module 502 each may be a program module, and are corresponding to a computer executable code. The computer executable codes can implement, when being executed, the sending of the pixel encoded data and the 3D video data.

In other embodiments, the receiving module 501 and the restoring module 502 each may further be a combination of a hardware module and a program module, such as a complex programmable array or a site programmable array.

In still other embodiments, the receiving module 501 and the restoring module 502 each may correspond to a hardware module, e.g., the encoding module and the sending module each may be an application-specific integrated circuit.

In some embodiments, the restoring module 502 may include at least one of: a color restoring sub-module and a depth value restoring sub-module.

The color restoring sub-module is configured to restore a color pixel value of the 3D video data according to color encoded data of the pixel encoded data.

The depth value restoring sub-module is configured to restore a depth-value pixel value of the 3D video data according to depth value encoded data of the pixel encoded data.

In some embodiments, the device further includes: a determination module.

The determination module is configured to determine a pixel encoding manner of the pixel encoded data.

The restoring module 502 is specifically configured to perform pixel decoding on the pixel encoded data according to the pixel encoding manner to obtain the pixel values of the 3D video data.

In some embodiments, the determination module includes at least one of: a first determination sub-module and a second determination sub-module.

The first determination sub-module is configured to determine the number of pixels included in the 3D video data, determine a total number of pieces of data according to the pixel encoded data, and determine the pixel encoding manner according to the total number of pixels and the total number of pieces of data.

The second determination sub-module is configured to interact pixel encoding parameters with the terminal, wherein the pixel encoding parameters at least include: the pixel encoding manner.

In some embodiments, the restoring module 502 may be specifically configured to execute at least one of:
decoding pixel encoded data of single pixels according to a single pixel encoding manner to restore the pixel values of the 3D video data; and
decoding pixel encoded data of N^{∗}M pixels according to a combined pixel encoding manner to restore the pixel values of the 3D video data.

In some embodiments, the restoring module 502 is specifically configured to query a pixel code mapping relationship according to the pixel encoded data to obtain pixel values corresponding to the pixel encoded data.

In some embodiments, the device further includes a receiving module 501.

The receiving module 501 is configured to receive, before restoring the pixel values of the 3D video data according to the pixel encoded data, an updated pixel code mapping relationship or an updated portion of the pixel code mapping relationship sent by the terminal.

An embodiment provides a computer storage medium, which stores computer instructions thereon. The instruction implements, when being executed by a processor, the operations of the method for data processing applied to the terminal or the MEC server, such as one or more operations of the method illustrated in FIG. 2 to FIG. 4.

As illustrated in FIG. 7, this embodiment provides an electronic device 700, which includes a memory 702, a processor 704, and a computer instruction stored on the memory 702 and executable on the processor 704, wherein the processor 704 executes the instruction to implement the operations of the method for data processing applied to the terminal or the MEC server, such as one or more operations of the method illustrated in FIG. 2 to FIG. 4.

In some embodiments, the electronic device further includes a communication interface 706; and the communication interface 706 may be used for interacting information with other devices. For example, if the electronic device 700 is a terminal, the communication interface at least may interact the information with an MEC server. For example, if the electronic device is an MEC server, the communication interface 706 at least may interact the information with a terminal.

Hereinafter, a specific example is provided in combination with any embodiments.

The common colors are numbered sequentially; after the collection of RGB data, a mobile phone scans the RGB data of each pixel in an image; and if the RGB data is within a color sequence, the RGB data is replaced with color serial numbers. Specifically, the RGB data of each pixel in the image are scanned, a statistics is made on all RGB data in the whole image, then the RGB are sequentially numbered, the RGB of each pixel are replaced with the serial numbers and then the pixels and the statistical RGB data is packaged to upload; an MEC server and the mobile phone each store a mapping table; when the RGB data is transmitted, the pixels are scanned horizontally; if the pixels are not in the mapping table, a mapping (such as pixel RGB-label A [16 bits] or [32 bits] or [8 bits]) is created and stored to the mapping table; and meanwhile, the RGB data is replaced with 16-bit color serial numbers; and upon the completion of scanning, the changed items and RGB data in the mapping table are uploaded, or codes of single pixels may be extended to N^{∗}N pixels to encode together.

In several embodiments provided by the disclosure, it is to be understood that the disclosed method and intelligent device may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a second processing unit, each unit may also physically exist independently, and two or more than two units may also be integrated into a unit. The integrated unit may be implemented by using a hardware form, and may also be implemented by using a form of hardware and software functional units.

Those of ordinary skill in the art may understand that all or a part of operations for implementing the above method embodiment may be accomplished by program instruction relevant hardware. The program may be stored in a computer readable storage medium. The program, when being executed, performs the operations of the method embodiment. The storage medium includes: various media capable storing a program code such as a mobile storage device, an ROM, an RAM, a magnetic disk or an optical disc.

When the integrated unit are implemented in the form of a software functional unit and sold or used as an independent product, the functions may be stored in a computer-readable storage medium. Based on such an understanding, the technical solutions of the disclosure essentially, or the part contributing to the prior art, or some of the technical solutions may be implemented in a form of a software product. The software product is stored in a storage medium and includes several instructions for instructing a computer device (which may be a personal computer, a server, or a network device) to perform all or some of the operations of the methods described in the embodiments of the disclosure. The foregoing storage medium includes any medium that can store program code, such as a U disk, a removable hard disk, an ROM, an RAM, a magnetic disk, or an optical disc.

It is to be noted that the technical solutions recorded in the embodiments of the disclosure may be combined freely if there is no conflict.

The foregoing descriptions are merely specific implementation manners of the disclosure but are not intended to limit the protection scope of the disclosure. Any variation or replacement readily figured out by a person skilled in the art within the technical scope disclosed in the disclosure shall fall within the protection scope of the disclosure.

## Claims

1. A method for data processing, applied to a terminal and comprising:
performing (201) pixel encoding according to pixel values of three-dimensional (3D) video data to obtain pixel encoded data; and
sending (203) the pixel encoded data to a Mobile Edge Computing, MEC, server, the pixel encoded data being used by the MEC server to restore the 3D video data,
wherein a data volume of the 3D video data before the pixel encoding is performed on the 3D video data is a first data volume, a data volume of the 3D video data after the pixel encoding is performed on the 3D video data is a second data volume, and the first data volume is greater than the second data volume.

2. The method of claim 1, wherein
the performing pixel encoding according to pixel values of 3D video data to obtain pixel encoded data comprises:
performing color encoding according to a color pixel value of the 3D video data to obtain color encoded data; and/or
performing depth value encoding according to a depth-value pixel value of the 3D video data to obtain depth value encoded data.

3. The method of claim 1 or 2, wherein
the performing pixel encoding according to pixel values of 3D video data to obtain pixel encoded data comprises:
querying a pixel code mapping relationship according to the pixel values of the 3D video data to determine the pixel encoded data.

4. The method of claim 3, further comprising:
selecting a pixel encoding manner according to preset information, wherein the preset information comprises at least one of: network transmission condition information, load condition information of the terminal, and load condition information of the MEC server; and
the performing pixel encoding according to pixel values of 3D video data to obtain pixel encoded data comprises:
performing the pixel encoding on the pixel values according to the selected pixel encoding manner to obtain the pixel encoded data.

5. The method of claim 4, wherein
the performing the pixel encoding on the pixel values according to the selected pixel encoding manner to obtain the pixel encoded data comprises at least one of:
performing single pixel encoding on pixel values of single pixels in the 3D video data according to a single pixel encoding manner to obtain a first type of encoded data, wherein a total number of bits occupied by the first type of encoded data is smaller than a total number of bits occupied by the pixel value; and
performing combined pixel encoding on pixel values of N^{∗}M pixels of the 3D video data according to a combined pixel encoding manner to obtain a second type of pixel codes, wherein N and M both are positive integers.

6. The method of claim 5, wherein
the N^{∗}M pixels are distributed adjacently; or
the N^{∗}M pixels are spaced according to a preset spacing manner.

7. The method of claim 3, wherein
the querying a pixel code mapping relationship according to the pixel values of the 3D video data to determine the pixel encoded data comprises:
querying the pixel code mapping relationship according to the pixel values of the 3D video data; and
responsive to that the pixel values are in the pixel code mapping relationship, determining the pixel encoded data according to pixel encoded values corresponding to the pixel values.

8. The method of claim 7, further comprising:
responsive to that the pixel values are not in the pixel code mapping relationship, updating the pixel code mapping relationship according to the pixel values, and sending the updated pixel code mapping relationship or an updated portion of the pixel code mapping relationship to the MEC server.

9. The method of claim 1, wherein
the performing pixel encoding according to pixel values of 3D video data to obtain pixel encoded data comprises:
sorting the pixel values of the 3D video data according to a preset sorting manner to obtain pixel value serial numbers of the 3D video data.

10. A method for data processing, applied to a Mobile Edge Computing, MEC, server and comprising:
receiving (301) pixel encoded data sent by a terminal; and
restoring (303) pixel values of three-dimensional, 3D, video data according to the pixel encoded data, wherein a data volume of the 3D video data before pixel encoding is performed on the 3D video data is a first data volume, a data volume of the 3D video data after the pixel encoding is performed on the 3D video data is a second data volume, and the first data volume is greater than the second data volume.

11. The method of claim 10, wherein
the restoring pixel values of 3D video data according to the pixel encoded data comprises at least one of:
restoring a color pixel value of the 3D video data according to color encoded data of the pixel encoded data; and
restoring a depth-value pixel value of the 3D video data according to depth value encoded data of the pixel encoded data.

12. The method of claim 10 or 11, further comprising:
determining a pixel encoding manner of the pixel encoded data; and
the restoring 3D video data according to the pixel encoded data comprises:
performing pixel decoding on the pixel encoded data according to the pixel encoding manner to obtain the pixel values of the 3D video data.

13. A device for data processing, applied to a terminal and comprising:
an encoding module (401), configured to perform pixel encoding according to pixel values of three-dimensional (3D) video data to obtain pixel encoded data; and
a sending module (402), configured to send the pixel encoded data to a Mobile Edge Computing (MEC) server, the pixel encoded data being used by the MEC server to restore the 3D video data,
wherein a data volume of the 3D video data before the pixel encoding is performed on the 3D video data is a first data volume, a data volume of the 3D video data after the pixel encoding is performed on the 3D video data is a second data volume, and the first data volume is greater than the second data volume.

14. The device of claim 13, wherein
the encoding module comprises:
a color encoding sub-module, configured to perform color encoding according to a color pixel value of the 3D video data to obtain color encoded data; and/or
a depth value encoding sub-module, configured to perform depth value encoding according to a depth-value pixel value of the 3D video data to obtain depth value encoded data.

15. The device of claim 13 or 14, wherein
the encoding module is specifically configured to query a pixel code mapping relationship according to the pixel values of the 3D video data to determine the pixel encoded data.

16. The device of claim 15, wherein the device further comprises:
a selection module, configured to select a pixel encoding manner according to preset information, wherein the preset information comprises at least one of: network transmission condition information, load condition information of the terminal, and load condition information of the MEC server; and
the encoding module is specifically configured to perform the pixel encoding on the pixel values according to the pixel encoding manner to obtain the pixel encoded data.

17. The device of claim 16, wherein
the encoding module is at least configured to execute at least one of: performing single pixel encoding on pixel values of single pixels in the 3D video data according to a single pixel encoding manner to obtain a first type of encoded data, wherein a total number of bits occupied by the first type of encoded data is smaller than a total number of bits occupied by the pixel value; and performing combined pixel encoding on pixel values of N^{∗}M pixels of the 3D video data according to a combined pixel encoding manner to obtain a second type of pixel codes, wherein N and M both are positive integers.

18. The device of claim 17, wherein
the N^{∗}M pixels are distributed adjacently; or
the N^{∗}M pixels are spaced according to a preset spacing manner.

19. The device of claim 15, wherein
the encoding module comprises:
a query sub-module, configured to query the pixel code mapping relationship according to the pixel values of the 3D video data; and
a determination sub-module, configured to determine, responsive to that the pixel values are in the pixel code mapping relationship, the pixel encoded data according to pixel encoded values corresponding to the pixel values.

20. The device of claim 19, further comprising:
an update module, configured to update, responsive to that the pixel values are not in the pixel code mapping relationship, the pixel code mapping relationship according to the pixel values, and send the updated pixel code mapping relationship or an updated portion of the pixel code mapping relationship to the MEC server.

21. The device of claim 13, wherein
the encoding module is specifically configured to sort the pixel values of the 3D video data according to a preset sorting manner to obtain pixel value serial numbers of the 3D video data.

22. The device of claim 15, wherein the pixel code mapping relationship may include at least one of:
a pixel code mapping table;
a plurality of discrete pixel code mapping value pairs; and
function expression manners for pixel values and pixel encoded data.

23. The device of claim 21, wherein the processor is configured to:
responsive to that the single code mapping manner is adopted, sort the pixel values of the 3D video data according to the preset sorting manner to obtain the pixel value serial numbers of the 3D video data; and
establish a mapping relationship between the pixel values and the pixel value serial numbers.

24. A device for data processing, applied to a Mobile Edge Computing, MEC, server and comprising:
a receiving module (501), configured to receive pixel encoded data sent by a terminal; and
a restoring module (502), configured to restore pixel values of three-dimensional (3D) video data according to the pixel encoded data, wherein a data volume of the 3D video data before pixel encoding is performed on the 3D video data is a first data volume, a data volume of the 3D video data after the pixel encoding is performed on the 3D video data is a second data volume, and the first data volume is greater than the second data volume.

25. The device of claim 24, wherein
the restoring module comprises at least one of:
a color restoring sub-module, configured to restore a color pixel value of the 3D video data according to color encoded data of the pixel encoded data; and
a depth value restoring sub-module, configured to restore a depth-value pixel value of the 3D video data according to depth value encoded data of the pixel encoded data.

26. The device of claim 24 or 25, further comprising:
a determination module, configured to determine a pixel encoding manner of the pixel encoded data; and
the restoring module is specifically configured to perform pixel decoding on the pixel encoded data according to the pixel encoding manner to obtain the pixel values of the 3D video data.

27. The device of claim 26, wherein
the determination module comprises at least one of:
a first determination sub-module, configured to determine a total number of pixels comprised in the 3D video data, determine a total number of pieces of data, and determine the pixel encoding manner according to the total number of pixels and the total number of pieces of data; and
a second determination sub-module, configured to interact pixel encoding parameters with the terminal, wherein the pixel encoding parameters comprise at least the pixel encoding manner.

28. The device of claim 26, wherein
the restoring module is specifically configured to execute at least one of:
decoding pixel encoded data of single pixels according to a single pixel encoding manner to restore the pixel values of the 3D video data; and
decoding pixel encoded data of N^{∗}M pixels according to a combined pixel encoding manner to restore the pixel values of the 3D video data.

29. The device of claim 24 or 25, wherein
the restoring module is specifically configured to query a pixel code mapping relationship according to the pixel encoded data to obtain pixel values corresponding to the pixel encoded data.

30. The device of claim 29, further comprising:
a receiving module, configured to receive, before restoring the pixel values of the 3D video data according to the pixel encoded data, an updated pixel code mapping relationship or an updated portion of the pixel code mapping relationship sent by the terminal.
